# EUROPEAN PATENT SPECIFICATION

(11) **EP 1 295 781 B1**
(45) Date of publication and mention of the grant of the patent: **18.07.2007**
(21) Application number: 02078856.8
(22) Date of filing: 18.09.2002
(51) Int. Cl.: B62D 25/14

(54) **A structural member for a motor vehicle**
Bauteil eines Kraftfahrzeuges
Elément structurel de véhicule automobile

(30) Priority: 25.09.2001 GB 0122993
(43) Date of publication of application: 26.03.2003
(73) Proprietor: Delphi Technologies, Inc., Troy, MI 48007 (US)
(72) Inventor: Dancasius, Michael, 42105 Wuppertal (DE); Wild, Marc D., 36093 Kuenzell (DE); Hamid, Mohamed Sahul, Rochester, MI 48098 (US)
(74) Representative: Denton, Michael John

(56) References cited:
- EP-A- 0 982 087
- DE-A- 4 104 256
- DE-C- 19 547 858
- DE-U- 29 916 467
- US-B1- 6 176 544

## Description

### Technical Field

The present invention relates to a structural member for use in a motor vehicle.

### Background of the Invention

In a motor vehicle, it is known to locate a structural member, in the form of a cross-car beam, in the cockpit area of the vehicle. The structural member extends across the vehicle below the dashboard. The steering column of the vehicle is secured to the structural member. During a collision, frontal crash energy is transmitted through the steering column to the structural member. Known designs of structural member have, in general, a circular cross-section which can resist the crash energy for a short time, but subsequently risk collapsing. DE-U-29916967 discloses a structural member in accordance with the preamble of claim 1. EP-A-0982087 discloses a structural member of trapezium cross-section.

### Summary of the Invention

It is an object of the present invention to provide an improvement to the structural member.

A structural member in accordance with the present invention is characterised over DE-U-29916467 by characterising features of claim 1.

Provides a structural member which maintains a deformation force at a high level without collapsing.

### Brief Description of the Drawings

The present invention will now be described, by way of example, with reference to the accompanying drawings, in which:-
Figure 1 is a perspective view of a structural member in accordance with the present invention;
Figure 2 is a cross-sectional view of the structural member of Figure 1; and
Figures 3 to 7 are cross-sectional views of alternative embodiments of structural member in accordance with the present invention.

### Description of the Preferred Embodiment

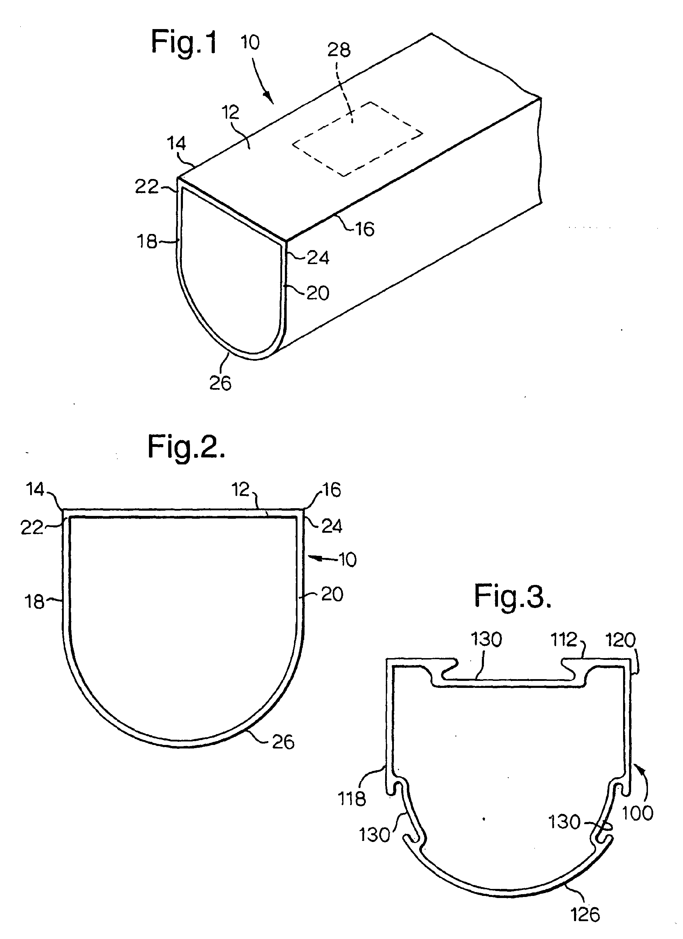

Referring to Figures 1 and 2, a structural member 10 in accordance with the present invention is straight, tubular, extends longitudinally, and is formed from metallic material (in this case, extruded aluminium or aluminium alloy). The structural member 10 has a first side 12 which is substantially flat and planar, and which has first and second longitudinal edges 14, 16, respectively. The structural member 10 also includes second and third sides 18, 20 which are substantially flat and planar, and which are integrally connected with the first and second edges 14,16 respectively, along their first respective first edges 22, 24 respectively. The angle between the first side 12 and second side 18 is substantially 90 degrees. The angle between the first side 12 and the third side 20 is substantially 90 degrees. The structural member 10 finally includes a curved side 26 which has a convex configuration and which is integrally connected with the second and third sides 18,20. The tubular structural member 10 therefore has a cross-sectional which is substantially D-shaped.

Embedded in the first side 12 at a predetermined position is a magnesium die-cast component 28 to provide support to the structural member where maximum deformation force may be required.

The structural member 10 is for use as a cross-beam in a motor vehicle and provides a flat surface 12 to which components can be secured. The magnesium component 28 is positioned where a steering column (not shown) is secured to the cross-beam. The structural member 10 provides a light weight cross-beam which can deform significantly, without collapsing, if the vehicle is subjected to a frontal impact. The structural member 10 maintains the deformation force at a high level by providing high energy absorption. This is achieved by the cross-sectional shape of the structural member 10, because the centre of gravity and the main inertia axis move relative to the compression area, thereby reducing the compression strain and stress. During a frontal vehicle impact, the compression strains and stresses are dissipated over a larger area than with previously known designs of structural member. In use, the flat surface is positioned in a motor vehicle to be substantially perpendicular to the expected direction of the compression force.

Figure 3 shows a structural member 100 in accordance with the present invention which is a first modification of the structural member 10 of Figures 1 and 2. The structural member 100 has first, second, third and curved sides 112, 118, 120, 126 respectively which are substantially as described above. The first side 112 and the curved side 126 have integral longitudinally extending slots 130 formed therein for the mounting of vehicle components.

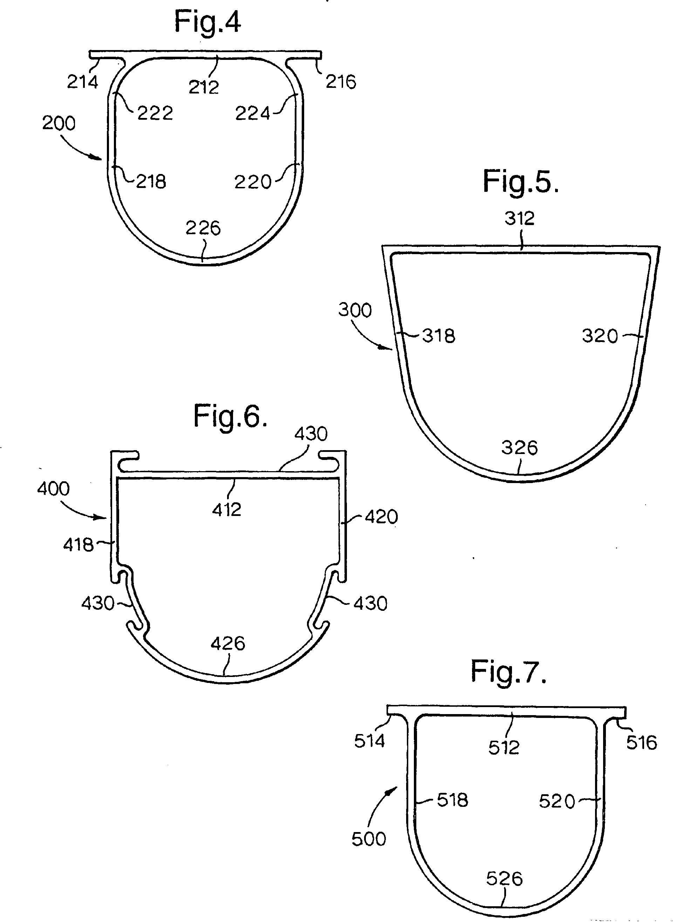

Figure 4 shows a structural member 200 in accordance with the present invention which is a second modification of the structural member 10 of Figures 1 and 2. The structural member 200 has first, second, third and curved sides 212, 218, 220, 226 respectively which are substantially as described above. The second side 218 is curved adjacent its first edge 222 and is joined to the first side 212 adjacent the first edge 214 thereof. Similarly, the third side 220 is curved adjacent its first edge 224 and is joined to the first side 212 adjacent the second edge 216 thereof.

Figure 5 shows a structural member 300 in accordance with the present invention which is a third modification of the structural member 10 of Figures 1 and 2. The structural member 300 has first, second, third and curved sides 312, 318, 320, 326 respectively which are substantially as described above. The second side 318 is connected to the first side 312 at an angle, preferably in the range 70 degrees to 90 degrees. Similarly, the third side 320 is connected to the first side 312 at an angle, preferably in the range 70 degrees to 90 degrees.

Figure 6 shows a structural member 400 in accordance with the present invention which is a modification of the structural member 100 of Figure 3. The structural member 400 has first, second, third and curved sides 412, 418, 420, 426 respectively which are substantially as described above. The first side 412 and the curved side 426 have integral longitudinally extending slots 430 formed therein for the mounting of vehicle components, in which the width of the slot in the first side is substantially equal to the width of the first side.

Figure 7 shows a structural member 500 in accordance with the present invention which is a fourth modification of the structural member 10 of Figures 1 and 2. The structural member 500 has first, second, third and curved sides 512, 518, 520, 526 respectively which are substantially as described above. The second side 518 is joined to the first side 512 adjacent the first edge 514 thereof. Similarly, the third side 520 is joined to the first side 512 adjacent the second edge 516 thereof.

As mentioned above, the structural member of the present invention may be formed from extruded aluminium or aluminium alloy. Alternatively, the structural member of the present invention may be formed by rolling from sheet metallic material such as aluminium, aluminium alloy, or steel.

## Claims

1. A structural member for a motor vehicle formed from metallic material, having a tubular configuration, and extending longitudinally, the structural member comprising a first substantially flat planar side (12) having first and second longitudinal edges (14, 16); a second side (18) connected to the first side at or adjacent to the first longitudinal edge and at an angle to the first side; a third side (20) connected to the first side at or adjacent to the second longitudinal edge and at an angle to the first side; and a curved side (26) connecting the second and third members such that the cross-section of the structural member is substantially D-shaped; **characterised in that** the second and third sides (18, 20) are substantially flat and planar.

2. A structural member as claimed in Claim 1, wherein the structural member (10) is formed from aluminium or aluminium alloy.

3. A structural member as claimed in Claim 2, wherein the structural member (10) is formed by extrusion.

4. A structural member as claimed in Claim 3, wherein a magnesium die-cast component (28) is embedded in the structural member (10) at a predetermined position.

5. A structural member as claimed in Claim 2, wherein the structural member (10) is formed by rolling from a sheet of aluminium or aluminium alloy.

6. A structural member as claimed in Claim 1, wherein the structural member (10) is formed from steel.

7. A structural member as claimed in Claim 6, wherein the structural member (10) is formed by rolling from a sheet of steel.

8. A structural member as claimed in any one of Claims 1 to 7, wherein the angle between the first side (12) and the second side (18) is substantially 90 degrees; and wherein the angle between the first side (12) and the third side (20) is substantially 90 degrees.

9. A structural member as claimed in any one of Claims 1 to 7, wherein the angle between the first side (312) and the second side (318) is between 70 and 90 degrees; and wherein the angle between the first side (312) and the third side (320) is between 70 and 90 degrees.

## Patentansprüche

1. Konstruktionselement für ein Kraftfahrzeug, welches aus einem metallischen Material gebildet ist, eine röhrenförmige Auslegung aufweist und sich der Länge nach erstreckt, wobei das Konstruktionselement Folgendes umfasst: eine erste, im Wesentlichen flache, ebene Seite (12) mit einer ersten und einer zweiten Längskante (14, 16); eine zweite Seite (18), welche an bzw. angrenzend an der ersten Längskante und in einem Winkel zu der ersten Seite mit der ersten Seite verbunden ist; eine dritte Seite (20), welche an bzw. angrenzend an der zweiten Längskante und in einem Winkel zu der ersten Seite mit der ersten Seite verbunden ist; und eine gebogene Seite (26), welche das zweite und das dritte Element so miteinander verbindet, dass der Querschnitt des Konstruktionselements im Wesentlichen D-förmig ist, **dadurch gekennzeichnet, dass** die zweite und die dritte Seite (18, 20) im Wesentlichen flach und eben sind.

2. Konstruktionselement nach Anspruch 1, wobei das Konstruktionselement (10) aus Aluminium oder Aluminiumlegierung gebildet ist.

3. Konstruktionselement nach Anspruch 2, wobei das Konstruktionselement (10) durch Strangpressen gebildet ist.

4. Konstruktionselement nach Anspruch 3, wobei an einer vorbestimmten Stelle ein Magnesiumdruckgussbauteil (28) in das Konstruktionselement (10) eingebettet ist.

5. Konstruktionselement nach Anspruch 2, wobei das Konstruktionselement (10) durch Walzen aus einem Blech aus Aluminium oder Aluminiumlegierung gebildet ist.

6. Konstruktionselement nach Anspruch 1, wobei das Konstruktionselement (10) aus Stahl gebildet ist.

7. Konstruktionselement nach Anspruch 6, wobei das Konstruktionselement (10) durch Walzen aus einem Stahlblech gebildet ist.

8. Konstruktionselement nach einem der Ansprüche 1 bis 7, wobei der Winkel zwischen der ersten Seite (12) und der zweiten Seite (18) im Wesentlichen 90 Grad beträgt; und wobei der Winkel zwischen der ersten Seite (12) und der dritten Seite (20) im Wesentlichen 90 Grad beträgt.

9. Konstruktionselement nach einem der Ansprüche 1 bis 7, wobei der Winkel zwischen der ersten Seite (312) und der zweiten Seite (318) zwischen 70 und 90 Grad beträgt und wobei der Winkel zwischen der ersten Seite (312) und der dritten Seite (320) zwischen 70 und 90 Grad beträgt.

## Revendications

1. Elément de structure pour un véhicule à moteur formé à partir d'un matériau métallique, ayant une configuration tubulaire, et s'étendant longitudinalement, l'élément de structure comportant un premier côté plan sensiblement plat (12) ayant des premier et second bords longitudinaux (14, 16), un deuxième côté (18) relié au premier côté au niveau du premier bord longitudinal ou adjacent à celui-ci et formant un angle par rapport au premier côté, un troisième côté (20) relié au premier côté au niveau du second bord longitudinal ou adjacent à celui-ci et formant un angle par rapport au premier côté, et un côté courbe (26) reliant les deuxième et troisième éléments de telle sorte que la section transversale de l'élément de structure est sensiblement en forme de D,
**caractérisé en ce que** les deuxième et troisième côtés (18, 20) sont sensiblement plats et plans.

2. Elément de structure selon la revendication 1, dans lequel l'élément de structure (10) est formé à partir d'aluminium ou d'un alliage d'aluminium.

3. Elément de structure selon la revendication 2, dans lequel l'élément de structure (10) est formé par extrusion.

4. Elément de structure selon la revendication 3, dans lequel un élément en magnésium moulé sous pression (28) est noyé dans l'élément de structure (10) à une position prédéterminée.

5. Elément de structure selon la revendication 2, dans lequel l'élément de structure (10) est formé par un laminage à partir d'une tôle en aluminium ou en alliage d'aluminium.

6. Elément de structure selon la revendication 1, dans lequel l'élément de structure (10) est formé à partir d'acier.

7. Elément de structure selon la revendication 6, dans lequel l'élément de structure (10) est formé par un laminage à partir d'une tôle d'acier.

8. Elément de structure selon l'une quelconque des revendications 1 à 7, dans lequel l'angle entre le premier côté (12) et le deuxième côté (18) est sensiblement égal à 90 degrés, et dans lequel l'angle entre le premier côté (12) et le troisième côté (20) est sensiblement égal à 90 degrés.

9. Elément de structure selon l'une quelconque des revendications 1 à 7, dans lequel l'angle entre le premier côté (312) et le deuxième côté (318) est compris entre 70 et 90 degrés, et dans lequel l'angle entre le premier côté (312) et le troisième côté (320) est compris entre 70 et 90 degrés.
